# EUROPEAN PATENT APPLICATION

(11) **EP 2 056 094 A1**
(43) Date of publication of application: **06.05.2009**
(21) Application number: 07075888.3
(22) Date of filing: 12.10.2007
(51) Int. Cl.: G01N 21/64

(54) **Fluorescence imaging system**

(71) Applicant: Universiteit Hasselt, 3590 Diepenbeek (BE)
(72) Inventor: Ciscato, Massimo, 1560 Hoeilaart (BE); de Jong, Iwan, 6228 CM Maastricht (NL); Valcke, Roland, 3530 Houthalen (BE); Vande Ven, Martin, 3590 Diepenbeek (BE)
(74) Representative: Bird, William Edward

(57) **Abstract**

A fluorescence imaging system for non-invasive, in situ measurement of fluorescence of a plant extremity is provided. The system comprises a portable imaging device, the imaging device comprising
- a substantially light tight enclosure for receiving a plant extremity in an inner volume;
- an illumination device for providing diffuse actinic light to the plant extremity in an inner volume of the enclosure; and
- an image capturing device for capturing at least one image of the fluorescent light, emitted from the plant extremity when illuminated by means of the actinic light from the illumination device.

## Description

### Technical field of the invention

The present invention relates to a method for in situ capture of data relating to fluorescence of a plant extremity, to a method for in situ capture of an image of the fluorescence of a plant extremity, and to a fluorescence imaging system for in situ measuring of fluorescence of a plant extremity.

### Background of the invention

Measuring fluorescence of plants, such as plants form vegetation, crops, cultivated plants and many more, is known. Fluorescence can be measured on extremities such as on outer ends of twigs, leaves, fruit, seed and other terminal ends when these have been removed from the plant.

It is known that the fluorescence of plants, and plant extremities in particular, changes upon biotic or abiotic stress, caused by bacteria, mould or viruses, by mineral nutrient stress (too much or too few minerals due to incorrect or inappropriate fertilisation), water stress (too much or too little water), mechanical stress due to presence of insects, presence of extreme environmental factors causing plant stress such as extreme weather circumstances, frost, heat, and many more.

It is also known that the fluorescence is an indication of the maturity of fruit. Forecast of the optimal harvest moment and period is essential for farmers in general, and fruit farmers in particular, and not only has economical advantages for the farmer, but may also result in harvesting fruit and crops with better preservation capacity.

It is further known that fluorescence may give an indication of information on the germinative capacity of seeds.

Obtaining data on fluorescence of plant extremities in general, and leaves and fruit or crops in particular, typically require separation of a statistical number of plant elements, this means damaging a significant number of plant extremities, possibly even removing a significant amount of fruit, to determine the states of the vegetation or the cultivation.

### Summary of the invention

It is an object of embodiments of the present invention to provide a good fluorescence imaging system and methods for in situ capture of data relating to the fluorescence of a plant extremity or for in situ capture of an image of the fluorescence of a plant extremity.

It is an advantage of some of the systems and methods according to the present invention to allow capture of data or an image of fluorescence of plant extremities, without the need to permanently separate the plant extremity from the plant. The systems and methods allow non-invasive and/or non-destructive in situ capture of image data relating to fluorescence of a plant extremity. The same system may also be used for invasive and/or destructive capture of image data relating to fluorescence of any part of a plant.

The above objective is accomplished by a method and system according to the present invention.

According to a first aspect of the present invention, a fluorescence imaging system for non-invasive, in situ measurement of fluorescence of a plant extremity is provided. The system comprises a portable imaging device, the imaging device comprising
- a substantially light tight enclosure for receiving a plant extremity in an inner volume;
- an illumination device for providing diffuse actinic light to the plant extremity in an inner volume of the enclosure; and
- an image capturing device for capturing at least one image of the fluorescent light, emitted from the plant extremity when illuminated by means of the actinic light from the illumination device.

The term 'substantially light tight' is to be understood as substantially preventing all external illumination from entering into the inner volume. Substantially light tight means that some external light may enter into the inner volume, due to the coupling of the plant extremity to the rest of the plant located outside the enclosure but not sufficient to make a measurement invalid. As the system is suitable to measure fluorescence in situ, i.e. the plant extremity is not to be separated from the plant itself, the extremity is to remain physically coupled to the rest of the plant, which is outside the enclosure. The coupling part of the plant, such as a branch, twig, stalk or stem, which couples the plant extremity to the rest of the plant passes through into the enclosure. Via this part, some minor amount of light may be introduced into the inner volume.

The term "portable" is to be understood as is the imaging device suitable to be brought to the position where the plant extremity is present. The portable imaging device may e.g. preferably hand-held or may be displaced by means of a robot, optionally using accessories such as telescopic or extendible and optionally articulating arms. The plant extremity may be introduced in the enclosure, substantially independent of the habitat of the plant.

The term "extremity" is to be understood as a part of a plant which is most remote along a branches of the plant. This are the tips and the outer ends of the twigs or branches and the objects coupled to these ends, such as leaves or a group of leafs, fruit (e.g. apple, pear, cherry, strawberry or peach and alike), seeds, flowers and alike.

The term "actinic light" is to be understood as light, which induces chemical activity within the plant extremity resulting in emission of fluorescent light in the red spectral region of chlorophyll present in the plant extremity. Actinic light may have an irradiation in a bandwidth of 230 nm to 1100nm, optionally between 400nm and 700nm. Optionally fluorescence may be measured using blue light in the range of 400nm to 500nm, or red light in the range of 600nm to 660nm, or green and yellow or orange light in the range of 500nm to 600nm may be used.

Blue LEDs such as e.g. having a wavelength peak at 470 nm and a, luminous intensity of typically 301m, may be used. As an example LED's Luxeon V star Blue from the company LUMILEDS may be used.

Illuminating a plant extremity with actinic light at intensity more than a saturating intensity, will have few, even no influence on the intensity of the fluorescence of the plant extremity.

The image capturing device may optionally be a digital camera, optionally a black-and-white (B&W) camera, such as a B&W CCD camera. A B&W digital camera has the advantage that images with a higher resolution (pixels per surface unit) may be obtained.

As an example, a camera resolution of 640 x 480 with pixel size of height 5.6 µm and width of 5.6 µm may be used.

The term "diffuse" is to be understood as being not concentrated or localized, but comprising in equal amount of radiation in substantially all directions. Providing illumination uniformly distributed along the wall of the inner volume may provide such diffuse illumination.

An fluorescence imaging system according to the first aspect of the present invention has the advantage that fluorescent images of a variety of plant extremities may be obtained, which images may be made under very strict and well defined illumination circumstances, and being less to even not influenced by the external light conditions. The plant extremities may be examined and images can be obtained in situ, i.e. there is no need to remove or separate the plant extremity from the plant itself although the present invention also includes such removal.

An in situ measurement, being a non-destructive measurement seen from the point of view of the vegetation or cultivation itself, has several advantages.

As an example in fruit cultivation, an in situ measurement may inform the fruit farmer of the maturity of his fruit without the need to harvest at least a representative amount of fruit.

More in general, persons involved in plant husbandry, e.g. with safeguarding the health of plants, not only fruit farmers, but also farmers and foresters, may use the fluorescence imaging system for monitoring the health of plants. Periodical inspection of the plants, e.g. the crops or fruit the farmer grow, or the leaves of trees which are to be observed by the forester, using the fluorescence imaging system may indicate biotic or abiotic stress, e.g. mineral nutrient stress (too much or too few minerals due to incorrect or inappropriate fertilisation), water stress (too much or too few water), mechanical stress due to presence of insects, stress due to illnesses such as caused by viruses, bacteria or mould, presence of extreme environmental factors causing plant stress such as extreme weather circumstances, frost, heat, and many more. Typically, stress present in the plant will be noticeable in the fluorescent images prior to visible deficiencies on the fruit or plants itself.

Hence the availability of a fluorescence imaging system which may be used to capture fluorescent images in situ may help to determine appropriate actions to remedy the presence of the stress more rapidly, without the need to take samples of the plants or fruit.

The fluorescence imaging system may further be used to monitor the ability to be preserved of fruit, e.g. during preservation of fruit.

According to some embodiments of the present invention, the inner volume may have an inner wall delimiting the inner volume, the inner wall having a black colour.

By making the inner walls of the inner volume black, the minor amount of the substantially light tight enclosure will be absorbed, which reduces further the interfering of the external light entering the enclosure with the fluorescent light being emitted by the plant extremity upon capturing the image.

According to some embodiments of the present invention, the illumination may comprise a plurality of light emitting elements distributed over the inner wall of the enclosure.

The plurality of light emitting elements, e.g. LED's such as blue LED's, may be distributed over the inner wall of the enclosure to obtain diffuse light within the inner volume. Optionally 48 blue LED's are used to provide the actinic light.

As an example 48 Luxeon V star LEds blue 5w may be provided in the enclosure.

According to some embodiments of the present invention, the enclosure may comprise a dome having an outer rim delimiting an opening, the enclosure comprising a moveable lid for light tight closing the opening by contacting the dome along the outer rim.

A dome is to be understood as a concave shape. The enclosure further may comprise a hinging device and/or a moving device for moving the lid between an opened and a closed position. In closed position, the lid closes the opening in a light tight way by contacting the dome along the outer rim. Contact between rim and lid is made along the contact zone of the lid. In opened position, the contact between the rim of the dome and the lid is interrupted at least locally, thereby allowing a plant extremity to enter into the inner volume of the enclosure. The dome and the lid thus delimit the inner volume and provide the inner walls of the enclosure. As the coupling part of the plant, coupling the plant extremity to the rest of the plant, may be present between the rim and the lid, it is understood that the contact between the dome and the lid in closed position may be interrupted by this coupling part of the plant, without departing from the scope of the present invention.

Optionally, a light seal may be provided to the rim of the dome and/or to the contact zone of the lid. Such tight seal may be an at least partially compressible and resilient foam, optionally a black colour foam. The provision of such seal has the advantage that the coupling part of the plant, coupling the plant extremity to the rest of the plant, may be become recessed in the seal when the lid is brought n its closed position, thereby snugly fitting around the coupling part and limiting the amount of external light that may enter into the inner volume of the enclosure together with the plant extremity. The black colour of the seal may partially absorb the external light entering into the inner volume.

The fluorescence imaging system may comprise a number of interchangeable lids, each lid having a different shape, still having a substantially identical contacting zone for contacting the rim of the dome. The different shapes of the lids may enable to accommodate the inner volume of the enclosure to different extremities to be received in the inner volume. As an example, one lid may have a substantially flat shape, whereas a second lid may have a concavity or a recess delimited by the contacting zone of the lid. The concavity of the lid is to be oriented inwards the inner volume. The first lid may be used to provide an enclosure for receiving leaf of a plant, whereas the second lid may be used to receive fruit of a given dimension.

According to some embodiments of the present invention, the illumination may comprise a plurality of light emitting elements distributed over the inner wall provided by the dome.

Optionally the dome may be a hemispherical dome. Optionally a plurality, such as 48 or 64 blue LED's may be distributed substantially equidistantly over the inner wall provided by the dome. The distribution of the plurality of light emitting elements, such as blue LED's, provides a more diffuse illumination of the plant extremity when introduced in the inner volume.

According to some embodiments of the present invention, the image capturing device may be optically connected with the inner volume by means of an aperture present at the extremity of the concave shape of the dome.

This position provides a proper top-view of the plant extremity introduced or received in the inner volume. In particular in combination with a hemispherical dome, and optionally with the plurality of light emitting elements, such as blue LED's substantially equidistantly over the inner wall provided by the dome, the quantity of incident light on the surface of the plant extremity, may be substantially homogeneous.

The positioning of the camera at the top of the dome has the advantage that in case fluorescence-emission is measured from leaf, the fluorescence-emission signals of the leaf are taken perpendicular in relation to the leaf surface. It was found that this perpendicularity may reduce the artifacts in the image which may occur when the camera is placed at an angle in relation to the leaf surface. The distance between camera and leaf surface in case the camera is provided at an angle in relation to the leas surface will be strongly asymmetric. the provision of a plurality of LEDs on a half-spherical dome also reduces the artifacts found in the image taken from leaf surfaces in particular, and plant extremities in general. The illumination that reaches the plant extremity, e.g. a leaf surface to induce the fluorescence is to be as homogeneous as possible. Using LED's substantially equally distributed over the surface of a half-spherical dome may improve the homogeneity of the illumination provided.

According to some embodiments of the present invention, the portable imaging device further may comprise at least a first filter, said first filter filtering fluorescent light form the actinic light.

Filtering fluorescent light is to be understood as allowing illumination with a wavelength in the range of the fluorescent light of the plant extremity to pass though the filter. Typically illumination with wavelength of more than 620nm may pass. Optionally the first filter has a stop-band limit being sufficiently remote from the bandwidth of the light emitted by the illumination. A difference of 50nm between the tail of the bandwidth emitted by the illumination and the stop-band of the filter may be provided.

According to some embodiments of the present invention, the portable imaging device further may comprise a filter wheel comprising at least a first filter, the filter wheel being suitable to bring said first filter in the optical path between said aperture and image capturing device.

According to some embodiments of the present invention, the first filter may be suitable for filtering fluorescent light from the actinic light.

This filter, when brought between the image capturing device and the fluorescing plant extremity, filters out the actinic light from the fluorescent light. As such, an image in which the pixel intensity is function of the fluorescent light at that particular point of the plant extremity present at that position in the image, is provided.

According to some embodiments of the present invention, the filter wheel may comprise a plurality of filters, the filter wheel being suitable for aligning one of the plurality of filters with the optical path between said aperture and image capturing device.

According to some embodiments of the present invention, the plurality of filters further may comprise a set of filters which by colour addition can make white light, e.g. a set of filters comprising a red filter, a blue filter and a green filter.

For example, a red filter may allow the visible light spectrum with wavelength of between 590 nm and 750 nm to pass though the filter. The green filter may allow the visible light spectrum with wavelength of between 495 nm and 590 nm to pass though the filter. The blue filter may allow the visible light spectrum with wavelength of between 450 nm and 495 nm to pass though the filter.

According to some embodiments of the present invention, the plurality of filters further may comprise a grey filter.

According to some embodiments of the present invention, the illumination further may comprise at least one white light emitting element.

Optionally the illumination comprises a plurality, e.g. three white LED's which are provided near the aperture via which the image capturing device is optically coupled to the inner volume.

According to some embodiments of the present invention, the fluorescence imaging system further may comprise a control unit for controlling the illumination and the image capturing device.

The fluorescence imaging system may further comprise a control unit which is electrically coupled to the portable imaging device for controlling the illumination and the image capturing device

According to some embodiments of the present invention, the control unit may be portable.

Optionally the power supply of the illumination and the image capturing device is part of the control unit.

The control unit may be electrically connected to the portable imaging device by means of electrical cables and/or signal cables.

Alternatively the portable imaging device may have a separate power supply, e.g. a number of batteries, which may be integrated in the portable imaging device or which may be portable as a separate unit. The control unit and the imaging device may be coupled, i.e. may exchange control signals, by means of a signal cable or may be coupled using wireless connection.

According to some embodiments of the present invention, the fluorescence imaging system further may comprise a light intensity sensor for sensing the external light intensity.

Any suitable sensor such as e.g. a quantum sensor LI-190SA, having a BNC connector, from the company LI-COR, Lincoln, Nebraska USA, may sense the external or ambient light intensity. The light intensity sensor is preferably connected to the outer surface of the portable imaging device. Optionally the light intensity sensor and the control unit may be electrically coupled or connected via wireless connection.

According to a second aspect of the present invention, a method to in situ capture an image of the fluorescence of a plant extremity is provided. The method comprises the steps of:
- introducing a plant extremity into an inner volume of a portable imaging device in a light tight manner and without separating the plant extremity from the plant;
- illuminating the plant extremity in the inner volume with actinic light;
- capturing at least one image of the fluorescent light, emitted from the plant extremity when illuminated by means of the actinic light of the illumination.

According to a third aspect of the present invention, a method to in situ capture data on the fluorescence of a plant extremity is provided. The method comprises the steps of:
- introducing a plant extremity in an inner volume of a portable imaging device in a light tight manner and without separating the plant extremity from the plant;
- illuminating the plant extremity in the inner volume with actinic light, the actinic illumination having an intensity substantially equal to the ambient light intensity;
- capturing at least one reference image of the fluorescent light, emitted from the plant extremity when illuminated by actinic light, the actinic illumination having an intensity substantially equal to the ambient light intensity;
- illuminating the plant extremity in the inner volume with actinic light, the actinic illuminating having an intensity at least equal to the saturating light intensity;
- capturing at least one sample image of the fluorescent light, emitted from the plant extremity when illuminated by the actinic light, the actinic illumination having an intensity having an intensity at least equal to the saturating light intensity;
- deriving from the at least one sample image and the at least one reference image, data on the fluorescence of a plant extremity.

According to some embodiments of the present invention, the method further may comprise the step of measuring the ambient light intensity, the capturing of the at least one reference image of the fluorescent light being done using actinic illumination having an intensity substantially equal to the measured ambient light intensity.

According to some embodiments of the present invention, a plurality of sample images of the fluorescent light may be captured, and a main sample image may be selected from the plurality of sample images.

According to some embodiments of the present invention, a plurality of reference images of the fluorescent light may be captured, and a main reference image may be selected from the plurality of reference images.

According to some embodiments of the present invention, a plurality of sample images of the fluorescent light may be captured, and a main sample image may be selected from the plurality of sample images. A plurality of reference images of the fluorescent light may be captured, and a main reference image may be selected from the plurality of reference images. The data on the fluorescence of a plant extremity may be derived from the main sample image and the main reference image.

The fluorescence imaging system may be a fluorescence imaging system according to the first aspect of the present invention.

The actinic illuminating may be provided by illumination using at least one, but optionally a plurality of blue LED's. The intensity of the actinic light may be set by adjusting the electric power fed to the LED's, or by using only a part of the plurality of LED's present.

The fluorescence imaging system may comprise a control unit to control the intensity of the actinic light optionally the fluorescence imaging system may comprise a light intension sensor positioned at the outer surface of the imaging device. The measured ambient light intensity may be communicated to the control unit electronically or via wireless connection.

The fluorescence imaging system may comprise an image capturing device, e.g. a B&W CCD camera, which is optically coupled to the inner volume of the enclosure by means of an aperture. Between the image capturing device and the aperture, a filter suitable for filtering fluorescent light form the actinic light may be positioned, e.g. by appropriate rotation of a filter wheel comprising this filter.

According to some embodiments of the present invention, the method further may comprise:
- introducing a reference surface in the inner volume,
- providing a grey filter in the optical path between the aperture and the image capturing device;
- capturing at least one correction image from the reference surface;
- obtaining correction parameters for correcting of the sample and/or the reference images from the correction image.

The reference surface is optionally a white, optionally flat surface. Optionally a plurality of correction images may be taken.

According to some embodiments of the present invention, a first correction image taken form the reference surface, being a dark correction image for correction of camera noise, is taken while no illumination is provided to the reference surface. This correction image, being the dark correction image is stored in a separate folder.

According to some embodiments of the present invention one or more correction images for correction inhomogeneous illumination are obtained by illuminating the reference surface using the blue LEDs and taking a correction image of the reference surface while illuminating the reference surface with this illumination intensity. As an example, correction images for increasing light intensity from 100 to 2000 m⁻² sec⁻¹ are taken, using intervals of 100 m⁻² sec⁻¹. The correction images may be stored in a separate folder. A correction image using an illumination approximating the external ambient light intensity, and a further correction image using an illumination identical to the saturating light intensity. The images taken from the plant extremity at an intensity of actinic light approximating the ambient light intensity may be corrected using the correction parameters obtained from the correction image art such ambient light intensity and optionally the dark correction image. The images taken from the plant extremity at a saturating intensity of actinic light may be corrected using the correction parameters obtained from the correction image art such saturating light intensity and optionally the dark correction image.

Using the maximum intensity of the light emitting elements and taking correction images at this intensity level, this correction image may correct for excitation light in the camera.

According to some embodiments of the present invention, the method further may comprise:
- providing a first filter in the optical path between the aperture and the image capturing device;
- illuminating the plant extremity with white light;
- capturing at least one image of the reflected light through the first filter reflected from the plant extremity;
- providing a second filter in the optical path between the aperture and the image capturing device;
- illuminating the plant extremity with white light from the illumination;
- capturing at least one image of the reflected light through the second filter, reflected from the plant extremity
- providing a third filter in the optical path between the aperture and the image capturing device;
- illuminating the plant extremity with white light from the illumination;
- capturing at least one image of the reflected light through the third filter, reflected from the plant extremity
- combining the images to thereby provide a colour image of the plant extremity.

The advantage is that next to the fluorescent images which may provide information on the health of the plant extremity, hence of the plant itself, may be further completed with visual information driveable from the colour image of the plant extremity.

It is understood that in the above methods, the filters, such as red, green blue, grey or fluorescent light filter may be part of a colour wheel. The filters may be brought in the optical at between aperture and image capturing device by appropriate rotation of the colour wheel.

It is understood that the data on the fluorescence of a plant extremity may be used for various applications, such as for defining the stress status (due to various reasons) of plants and crops, selecting seeds with high germinative capacity or germinativer power, from seeds with low germinative capacity, determination of maturity of fruit in the orchard or on the field and determination of preservation capacity of the harvest.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved methods and apparatus for generating information on the health or stress of the plants of which fluorescence images or data is captured. From the images, data may be obtained by using image analysis techniques. Numerous statistical or other parameters may be calculated from the data based on the image or successive images taken on the same or different plant extremities. Such data related to images of plant extremities with known health or stress status may be used to "train" artificial intelligence systems expert systems or neural networks. Data related to images of plant extremities with unknown health or stress status may be evaluated using such artificial intelligence to predict the health status or stress status of these plant extremities. It was found that using data and images obtained by a fluorescence imaging system or a method according to the present invention, may increase the accuracy of health or stress prediction, up to 90% accurate or more.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic view of a vertical cross-section of a portable imaging device of a fluorescence imaging system according to an embodiment of the present invention.
Fig. 2 is a schematic, perspective view of the vertical cross-section of the portable imaging device, as shown in Figure 1.
Fig. 3 is a schematic view of the dome of the portable imaging device, as shown in Figure 1
Fig. 4 is a schematic view of a filter wheel and image capturing device of the portable imaging device, as shown in Figure 1.
Fig. 5 is a view of the portable imaging device as shown in the Figures 1 to 4, coupled to a control unit.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art, in one or more embodiments.

Similarly it should be appreciated that in the description of exemplary embodiments of the invention, various features of the invention are sometimes grouped together in a single embodiment, figure, or description thereof for the purpose of streamlining the description and aiding in the understanding of one or more of the various inventive aspects. This method of description, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

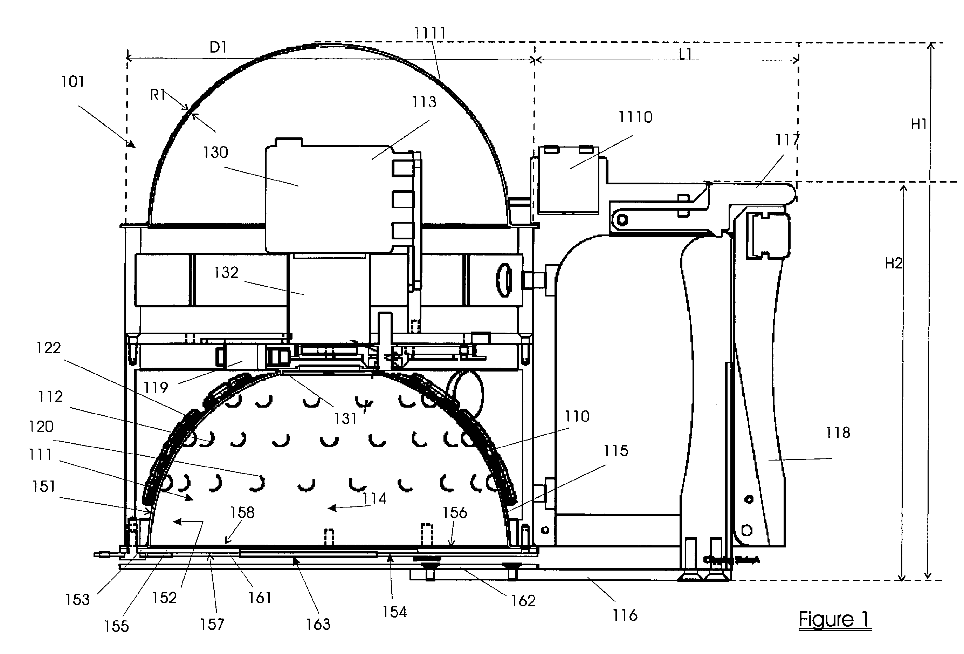

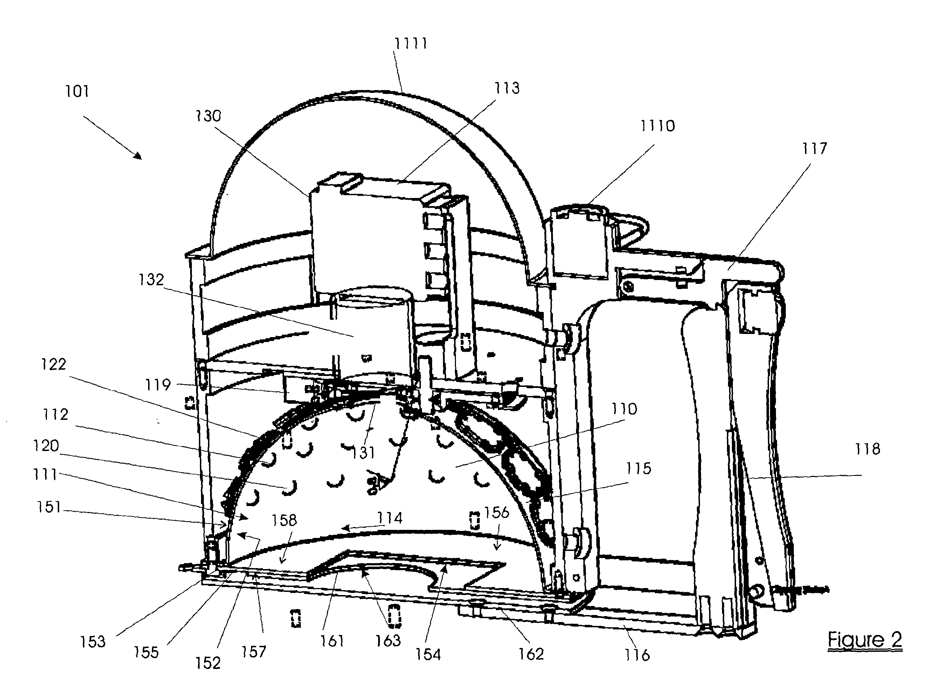

An embodiment of a fluorescence imaging system 100 according to an embodiment of the present invention is shown in figure 1, figure 2, figure 3, figure 4 and figure 5.

The fluorescence imaging system 100 for in situ measuring of fluorescence of a plant extremity comprises a portable imaging device 101. The imaging device comprises a substantially light tight enclosure 110 for receiving a plant extremity in an inner volume 111; an illumination device 112 for providing diffuse actinic light to the plant extremity in the inner volume 111 of the enclosure 110, and an image capturing device 113 for capturing at least one image of the fluorescent light emitted from the plant extremity when illuminated by means of the actinic light of the illumination 112.

The inner volume 111 has an inner wall 114, delimiting the inner volume, which has a black colour, e.g. by applying a matt black paint to the inner wall 114, or by covering the inner wall with a matt black material, e.g. a black foam of black textile cloth. Alternatively or additionally, the inner wall itself may be made from inherently black material.

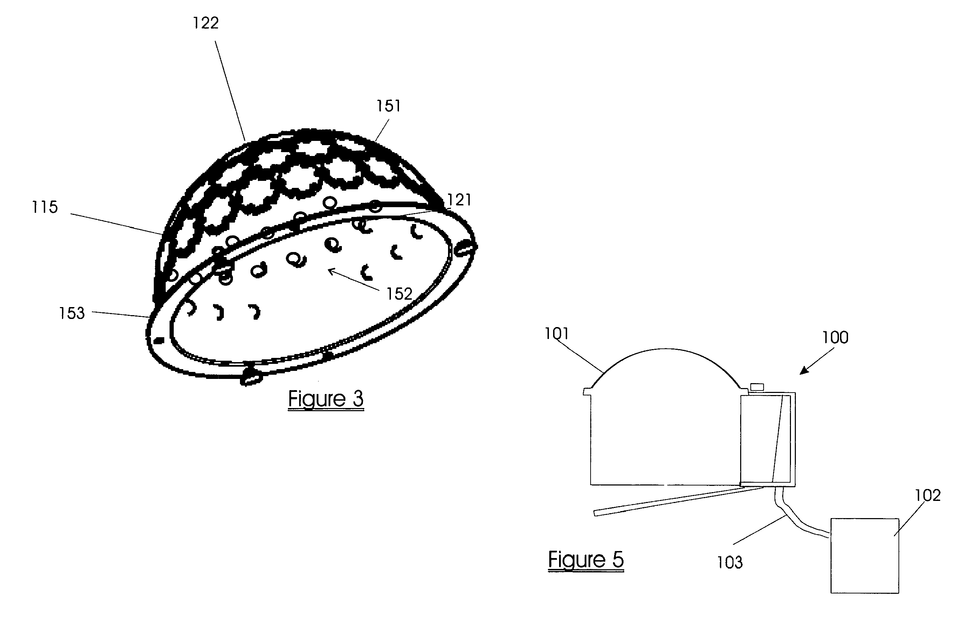

The illumination device 112 preferably comprises a plurality of light emitting elements 120 distributed over the inner wall 114 of the enclosure 110. In this embodiment, as best visible in figure 3, a part of the inner wall 114 is provided by a dome 115, onto which a plurality of individually addressable LED's, e.g. 48 blue LED's and two or three white LED's (being white light emitting elements), each having its individual control unit 122, are provided. The control units 122 are located at the outer surface 151 of the dome 115. The LED's 121 extend through the dome 115 to the inner surface 152 of the dome, providing a part of the inner wall 114 of the inner volume 111.

As an example, the blue LED's (providing the actinic light) may be Luxeon V star LEDs blue, being 5W LED's from the company LUMILEDS, emitting blue light with peak intensity at 470nm. The white LED's may be Luxeon V star LEDs white, being 5W LED's from the company LUMILEDS.

The dome has an outer rim 153 encompassing an opening 154. In this embodiment, the dome is provided with a lower plate 155 for closing the lower side 156 of the concave shape of the dome 115, in this particular embodiment a hemispherical shape. The lower plate 155 is provided with the opening 154.

The enclosure 110 comprises a moveable lid 116 for light tight closing the opening 154 by contacting the dome 115 along the outer, lower 156 of the concave shape of the dome 115, i.e. along the lower surface 157 of the plate 155. The lid 116 may be moveable by means of a lever 118, being part of the grip 117 which makes the imaging device 101 portable and suitable to be hold and manipulated by hand. The imaging device 101 is thus a hand held device. It is understood that the imaging device may comprise other elements to provide grip for an operator holding the device. The lower surface 157 of the plate 155 is provided with light tightening seal 161, e.g. black foam, which is to contact the inner side of the plate 162 of the lid 116. When the lid 116 closes the opening 154, the seal 161 is clamped between the plate 162 of the lid 116 and the outer surface 157 of the plate 155 of the dome 115. Optionally the surface of the lid oriented to the inner volume 111 may be black.

The seal 161 may be a sheet of compressible material having an opening 163 identical or smaller than the opening 154 in the lower plate 155. The opening 154 in the lower plate 155 encompasses the opening 163 in the seal 161.

As an alternative, the seal 161 may be provided to the inner surface of plate 162. The seal is not to be provided with an opening 163 in that case. Optionally both the inner side of the plate 162 and the outer surface of the plate may be provided with a seal, e.g. a sheet of compressible material.

When, as an example, a twig with leaves is to be introduced into the dome, a part of the twig coupling the leaves to the plant, will be clamped between plate 162 of the lid 116 and outer surface 157 of the plate 155 of the dome. Via the opening 154 and opening 163, one or more leaves may enter in the inner volume 111 of the enclosure. The twigs do not need to be removed from the plant, e.g. tree. Hence, the system and methods of the present invention allow in situ, non-invasive examination of fluorescent properties of an extremity of a plant. In particular the in situ, non-invasive examination is carried out on an extremity of the plant inside the measuring apparatus while another part of the plant is outside the measuring apparatus. In the embodiment as shown in the figures 1 to 4, the width of the seal 161, i.e. the distance between outer rim and the opening 154, is large enough to prevent light entering between the lid 116 and the plate 155 of the dome 115, to the inner volume 111 of the enclosure 110. The path, which the penetrating exterior light is to follow, is too long. The foam will absorb the penetrating light, which is preferably black to promote this light absorption.

In other embodiment, where the width of the seal cannot be made sufficiently long, e.g. in case the opening 154 is to be provided large to allow larger plant extremities to enter into the inner volume, the seal may be made thicker and softener, to allow the seal (e.g. black foam) to match better with the part of the plant coupling the plant extremity to the plant itself, which part is clamped between lid and dome.

In general, the seal may be provided from foamed polymer material such as polyurethane foam or from an elastomer material such as e.g. rubber, e.g. NBR / EPDM-rubber

It is understood that, in order to render the fluorescence imaging system suitable to gather data of a plurality of different plant extremities, the lid 116 and the plate 155 may be made disconnectable from the fluorescence imaging system. The fluorescence imaging system may comprise a plurality of exchangeable plates 155 (e.g. 5 exchangeable plates) and/or exchangeable lids 116 which facilitate the fluorescence imaging system to adapt to different plant extremities to be examined. Optionally the dome itself may be disconnectable and exchangeable with domes having other dimensions for facilitating the fluorescence imaging system to adapt to different plant extremities to be examined. Hence the system may be modular in construction.

The inner surface 158 of the plate 155 forms part of the inner wall 114 and is optionally provided with a black colour, similarly or identically as the inner side 152 of the dome 115.

The image capturing device 113, such as comprising a camera 130, such as a black & white camera, or a CCD or CMOS camera, is optically connected with the inner volume 111 by means of an aperture 131 present at the extremity of the concave shape of the dome. The optical system 132 of the camera, such as appropriate lenses and the like, is preferably mounted in front of the aperture 131.

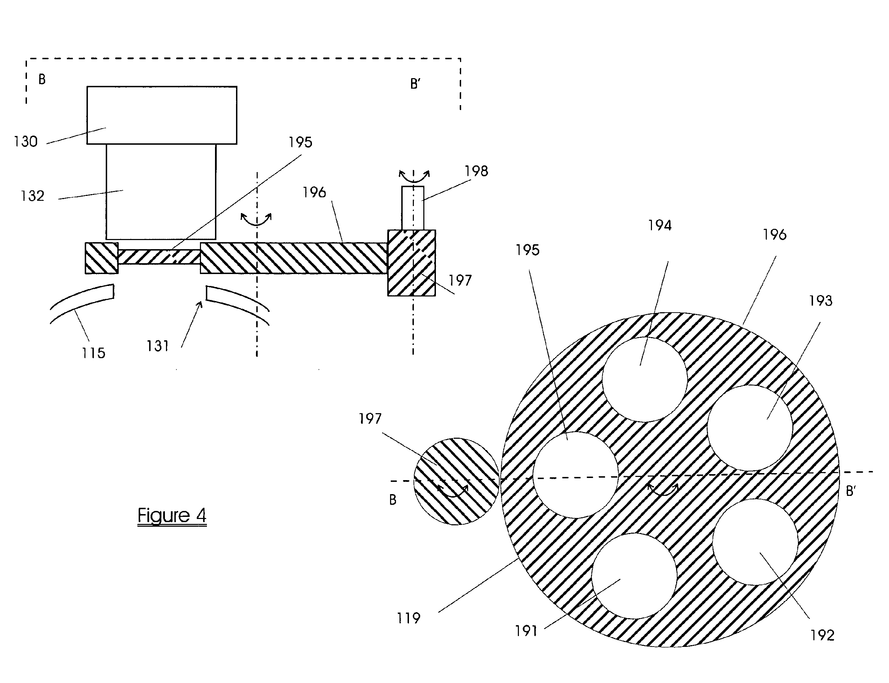

The portable imaging device 101 of the fluorescence imaging system 100 further comprises a filter wheel 119, as shown in detail in Figure 4. The filter wheel 119 can comprise in this embodiment five filters, i.e. a first filter 191 filtering fluorescent light and rejecting the actinic light, a second, grey filter 192, and further a red filter 193, a green filter 194 and a blue filter 195.

The filter wheel is mounted in the optical path between aperture 131 and optical elements 132 of the camera 130. The filter wheel 119 hence is suitable for allowing one of the pluralities of filters into the optical path between the aperture 131 and image capturing device 113.

As an example, the filter wheel 119 may be a gear wheel 196 in which the filters are located. The gear wheel 196 is driven by means of a counter gear wheel 197 and a motor 198, e.g. a stepper motor.

An advantage of using a filter wheel is that a single camera such as a black & white camera can be used to take a variety of images including a colour image formed by superposition of colour separation images taken with a plurality of filters, e.g. one image each with a red, green and blue filter respectively. With this simple arrangement and with a suitable choice of filters with appropriate acceptance and rejection wavelength ranges, a variety of different images may be recorded.

The fluorescence imaging system 100, more particular in this embodiment, the portable imaging device 101, can comprise a light intensity sensor 1110 for sensing the external light intensity. The light intensity sensor 1110 is mounted on the outer side of the portable imaging device 101, such as near or on the grip 117. It is understood that most of the elements of the portable imaging device 101, such as the image capturing device 113, the dome 115 and the colour wheel 119 are encapsulated in a casing 1111 for protecting these components against e.g. environmental influences (e.g. wind, rain, light, ...) and mechanical damage, e.g. impact. The casing 1111 thus is optionally liquid tight and light tight. The casing 1111 is coupled to the grip 117.

The fluorescence imaging system 100 further comprises a control unit 102 coupled to the portable imaging device 101 for controlling the illumination 112 and the image capturing device 113 and optionally the positioning of the filter wheel 119. Also the light sensor 1110 may be coupled to the control unit, in particular to provide data on the external light intensity to the control unit. The portable imaging device 101 and the control unit 102 may be coupled to each other by electrical cables and/or signal cables 103 or by any other means. Optionally, the portable imaging device 101 and the control unit 102 may be coupled by means of wireless transmission of data information and signals, e.g. via wireless connections such as provided by the Bluetooth protocol. The portable imaging device 101 and the control unit 102 therefore may be provided with appropriate wireless transmission circuitry. An example of a suitable light sensor 1110 may bean LI-190SA quantum sensor (with BNC connector) from LI-COR Inc (Lincoln - NE - USA).

The control unit may comprise a power supply, e.g. one or a plurality of batteries, such as rechargeable batteries or solar cells or other types of portable power generators. The electrical power is transmitted to the portable imaging device 101 by means of appropriate electrical cables.

The control unit itself may be portable as well, in order to be able to carry the fluorescence imaging system in the field for capturing data on fluorescence.

As an example, the image capturing device can be a B&W CCD camera of type DMK 21F04, provided with a lens of type H2616FICS, both from the company "The Imaging Source LLC" (Charlotte - NC - USA). A five-filter wheel is used in one embodiment comprising:
- A red additive filter passing illumination with wavelength of more than 550 nm.
- A blue additive filter passing illumination with wavelength of less than 510 nm
- A green additive filter passing illumination with wavelength between 560 and 590 nm.
- A fluorescence illumination filter passing illumination with wavelength of more than 660nm. More in particular, the filter passes only 0.001% of illumination with a wavelength of 560nm, passes 50% of the illumination with wavelength 610 ± 6nm, and passes at least 99% of the illumination with wavelength more than 660nm.
- A grey filter, passing only 50% (± 5%) of the illumination in the range of 400 to 700 nm. As an example, the red, green and blue filter may be the filters of the filter set NT52-546, from Edmund Optics Inc (Barrington - NJ- USA). The fluorescence illumination filter may be a filter "NT32-755" from Edmund Optics Inc (Barrington - NJ- USA). The grey filter may be a filter "NT46-212" from Edmund Optics Inc (Barrington - NJ- USA).
   Typical dimensions of the portable imaging device is a total height H1 of less than 500 mm, e.g. about 203 mm, the grip having a height H2 of at least 50mm, e.g. about 140 mm. The casing 1111 at the top of the portable imaging device has a polygonal, e.g. hexagonal or spherical shape with radius R1 of at least 50mm, e.g. about 71 mm, and a substantially cylindrical body encompassing the dome, having a diameter D1 of at least 100mm, e.g. about 164 mm. The grip has a length L1 of at least 80mm, e.g. about 101.5 mm
   Turning to a further aspect of the present invention, a system for in situ non-invasive capture of an image of the fluorescence of a plant extremity (part of the complete plant) comprises a fluorescence imaging system being a portable imaging device, the imaging device comprising
   ■ a substantially light tight enclosure for receiving a plant extremity in an inner volume;
   ■ an illumination device for providing diffuse actinic light to the plant extremity in the inner volume of the enclosure; and
   ■ an image capturing device for capturing at least one image of the fluorescent light, emitted from the plant extremity when illuminated by means of the actinic light of the illumination device. It is understood that such fluorescence imaging system can be a fluorescence imaging system according to the first aspect of the present invention.
   In a step of a method according to an embodiment of the present invention, a plant extremity is introduced in the inner volume without separating the plant extremity from the plant. This plant extremity may be a twig with one or a plurality of leaves, a fruit such as an apple, pear, cherries, or seeds or one or more flowers. It is understood that optionally the fluorescence imaging system, in particular the shape of the dome, opening lid and alike, is chosen in function of the plant extremity to be examined.
   In a further step, the plant extremity is illuminated in the inner volume with actinic light from the illumination of the portable imaging device, during or after illumination, at least one image of the fluorescent light, emitted from the plant extremity when illuminated by means of the actinic light of the illumination is captured.
   As such an in situ image of the fluorescence of a plant extremity is captured. The data of the image, optionally be captured by a digital camera, such as a B&W CCD camera, may be sent to a computer for further processing. This data transfer may be done using signal cables or wireless. The computer may be a laptop or palmtop computer that is also portable allowing real-time measurements.
   In a further step, at least one reference image is captured of the fluorescent light emitted from the plant extremity when illuminated by means of the actinic light of the illumination device, the actinic illumination having an intensity substantially equal to the ambient light intensity, i.e. outside the apparatus. Optionally a plurality of reference images can be captured.
   Optionally the method further comprises the step of measuring the ambient light intensity. This measured light intensity may be used during the capturing of the at least one reference image. An actinic illuminating having an intensity substantially equal to the measured ambient light intensity may be used to make the reference images. The fluorescence imaging system may be provided with a light intensity sensor (also referred to as "quantum sensor"), which may be provided on the outer side or surface of the portable imaging device.
   Making at least one reference image by means of actinic at an intensity approximately equal to that of the external intensity, has the advantage that the images with saturating light, which will follow after capturing the reference image or images, are taken from plant extremities which are in a "steady state" condition. The manipulation of the plant extremity and introducing it in a light tight inner volume, may already influence the fluorescence of the plant extremity. Starting from a plant extremity, which is in a different condition from the condition it has experienced in the external light, might influence the capturing of data with saturating actinic light. Therefore, a first step of "conditioning" the fluorescent response of the extremity in the inner volume to the state as is had had in the external environment, i.e. its steady state conditions before measurement, can reduce or eliminate the influence of the manipulation of the plant extremity prior to capturing images.
   After taking a reference image or reference images, the plant extremity in the inner volume is illuminated with actinic light from the illumination of the portable imaging device, the actinic illumination having an intensity at least equal to the saturating light intensity. At least one sample image of the fluorescent light, emitted from the plant extremity when illuminated by means of the actinic light of the illumination, is now captured.
   Optionally, a plurality of sample images of the fluorescent light are captured. Optionally, a main sample image is selected from the plurality of sample images based upon defined conditions. This selection is preferably done automatically, e.g. by image analysis in a suitable computing device such as a control unit or a computer such as a laptop. As an example, the image captured comprises a plurality of pixel values, each pixel value having a pixel intensity. The main sample image can be selected in accordance with the sample image of the plurality of sample images, which has the highest pixel intensity in absolute terms. Alternatively the main sample image is the sample image of the plurality of sample images, which has the highest average pixel intensity. Other methods of selection are included within the scope of this invention.
   Optionally, a plurality of reference images of the fluorescent light are captured. A main reference image is selected from the plurality of reference images based upon defined conditions. This selection is preferably done automatically, e.g. by image analysis in a suitable computing device such as a control unit or a computer such as a laptop. As an example, the image captured comprises a plurality of pixel values, each pixel value having its pixel intensity. The main reference image can be selected as the reference image of the plurality of reference images, which has the highest pixel intensity in absolute terms. Alternatively the main reference image is the reference image of the plurality of reference images, which has the highest average pixel intensity. Other methods of selection are included within the scope of this invention.
   This selection may be executed by the control unit of the fluorescence imaging system, based upon the image data which is provided from the portable imaging device to the control unit, using appropriate data transfer.
   Data on the fluorescence of a plant extremity may thus be derived, typically by the control unit or by a post treatment of the image data by appropriate computer systems, from the at least one sample image and the at least one reference image, optionally from the main reference image and the main sample image.
   It is understood that the method further may comprise the steps of controlling the image capturing device, the illumination, the filter wheel and the like by the control unit.
   Turning to the interface being part of the control unit, several parameters may be set prior to executing the image capturing by the operator, optionally via a touch screen.
   Next to a general menu where the operator may choose general options (save information, adjust power of the illumination, ...), the operator may choose parameter setting for the imaging that has to be to done (RGB, fluorescent measurement or steady state) Typically the system is adapted to provide the following parametric choices or selections, e.g.
   - Time of illumination before taking first image (either reference image or sample image)
   - Time frame for taking images (both for reference image or sample image)
   - Number of images taken in this time frame (both for reference image or sample image)
   - Light intensity (e.g. on a scale from 0 to 2000; 0-900 for capturing reference images, or 1000-2000 for capturing sample images); it is understood the light intensity to be used during capturing of reference images may be set semi-automatically or automatically using a quantum sensor or light intensity sensor, sensing the external light conditions.
   - Exposure time of camera (both for reference image or sample image)
   - Gain of camera

Default values may be set in case no selections are made by the operator.

The method may further comprise an image correction step. For example, the fluorescence imaging system comprises an image capturing device being optically connected with the inner volume by means of an aperture present at the extremity of the concave shape of the dome, the fluorescence imaging system further comprising a grey filter.

The method further comprises the step of obtaining correction parameters (calibration step) before receiving the plant extremity in the inner volume, by
- introducing a reference surface in the inner volume, e.g. placing a white TLC (thin layer chromatography) plate before the opening in the lower plate of the dome, covering the opening in the lower plate of the dome;
- providing a grey filter in the optical path between the aperture and the image capturing device, such as TN46-212 Filter ND ABS 25 mm diameter 3 0D from Edmund Optics Inc (Barrington - NJ- USA);
- capturing at least one correction image of the reference surface;
- obtaining correction parameters for correcting of the sample and/or the reference images from the correction image.

A plurality of correction images may be taken. For taking the first correction image, being a dark correction image for correction of camera noise, no illumination is provided to the reference surface. This correction image, being the dark correction image is stored in a separate folder. A plurality of correction image for correction inhomogeneous illumination is obtained by illuminating the reference surface using the blue LEDs. The light intensity is stepwise increased from 100 to 2000 m⁻² sec⁻¹, images are taken at intervals of 100 m⁻² sec⁻¹ and stored, e.g. in a separate folder. Corrections images, taken using an illumination intensity approximating the preset value, are loaded, optionally automatically, and used to correct the image or images captured during the experiment. The reference surface is optionally a white, optionally flat surface. The image data at least one reference image and the at least one sample image, but optionally the plurality of reference and/or sample images may first be corrected using the correction parameters. Optionally the main sample image and/or the mail reference image is first corrected before data on fluorescence is derived from these images.

The method may further comprise a real colour image capturing step. For this, the fluorescence imaging system comprises an image capturing device being optically connected with the inner volume by means of an aperture present at the extremity of the concave shape of the dome, the fluorescence imaging system further comprising a set of filters that by means of color addition can generate white light, e.g. a red filter, a green filter and a blue filter, the illumination device further comprising at least one white light emitting element. The white light emitting element may comprise a plurality of coloured light emitting elements which combine to generate white light.

The method further comprises the step of obtaining a colour image of the plant extremity provided in the inner volume, by
- providing a first filter, e.g. the red filter, in the optical path between the aperture and the image capturing device;
- illuminating the plant extremity with white light from the illumination device;
- capturing at least one image of the reflected light through the first filter being reflected from the plant extremity;
- providing a second filter, e.g. the green filter, in the optical path between the aperture and the image capturing device;
- illuminating the plant extremity with white light from the illumination device;
- capturing at least one image of the reflected light through the second filter being reflected from the plant extremity
- providing a third filter, e.g. the blue filter, in the optical path between the aperture and the image capturing device;
- illuminating the plant extremity with white light from the illumination device;
- capturing at least one image of the reflected light through the third filter being reflected from the plant extremity
- combining the images thereby providing a colour image of the plant extremity. Obtaining both a colour 'real live' image and a fluorescence image (and accompanying data derived from this image) from one and the same plant extremity is useful to determine to what extent external visual defects are noticeable when the plant extremity, hence the plant is subjected to a given degree of stress.

As an example a reference or correction measurement is executed. A white reference surface is introduced before the opening in the inner volume. The light from the blue LEDs is irradiated onto the white surface using a light intensity which will be applied during the experiment, e.g. a saturating illumination intensity. Optionally a plurality of correction images is obtained, such as an additional correction image taken when no light is provided from the LED's. This correction image will provide correction for the noise from the camera. A further or alternative correction image is obtained when a light is provided from the LED's using a light intensity approximating the external illumination. This correction image will provide correction for the illumination circumstances at the illumination level approximating the external illumination. Using the grey filter, a correction (calibration) image is obtained, and correction data for making appropriate corrections due to system and camera imperfections are calculated from this reference image.

As an example, a "main steady state image" is obtained by illuminating the object with an intensity approximately equal to the external illumination, typically in the range of 0 to 900 µmol per m² per second, by a plurality of blue LEDs. A number of images (using the fluorescent filter) are taken over a given time period (e.g. 33 images in 1 second), by the image capturing device, transferred to the control unit and stored. From this set of steady state images, the "main" reference of 'steady state' image with the maximum average pixel intensity is selected. The average pixel value is the average of the pixel values calculated over all pixels constituting the image. This result in an image with pixel values Sᵢⱼ, i and j ranging over the image size of the camera, e.g. from 0 to 640 and j ranging from 0 to 480. A pixel size of 5.6µm in height and width may be applied. A camera taking 30 frames per second (fps), or 15 fps, 7.5 fps or even 3.75 fps may be used. A camera with a fixed resolution and 8 bits per pixel bit depth can be used.

A "main sample image" is obtained by illuminating the object with an intensity approximating the saturating illumination, typically in the range of 1000 to 2000 µmol per m² per second, e.g. using all blue LEDS available. A number of images (using the fluorescent filter) are taken over a given time period (e.g. 33 images in 1 second) and stored. From this set of sample images, the "main" sample image with the maximum average fluorescent intensity is selected. This results in an image with pixel values Mᵢⱼ, i and j ranging over the image size of the camera, e.g. i ranging from 0 to 640 and j ranging from 0 to 480.

The two "main" images are preferably corrected using the correction data. As such two corrected main images are obtained, comprising pixel values being S^{C}ᵢⱼ respectively M^{C}ᵢⱼ.

These corrected main images are then used to calculate the fluorescence image, typically by normalizing the sample image to either the reference or the sampled intensity: each pixel value Fij = (M^{C}ᵢⱼ - S^{C}ᵢⱼ)/ S^{C}ᵢⱼ or = (M^{C}ᵢⱼ - S^{C}ᵢⱼ)/ M^{C}ᵢⱼ.

From the fluorescence image, a number of parameters of the plant extremity, hence of the plant itself, are calculated, e.g. state of health parameters. The intensity distribution of the pixel values in the fluorescent image is typically not normally distributed. Statistical parameters such as percentiles (e.g. 10%, 20%, 30%, ...) are preferably derived from the pixel intensity distribution curve. From the distribution, also the best fit normal distribution can be calculated. Additional parameters may be the intensities where the measured distribution and the best fitting normal distribution cross.

Comparing the set of parameter values with reference sets, can provide an idea of the health of the measured plant extremity. To improve the assessment of the state of health of the plant an expert system can be used. Such an expert system may include a knowledge database. To obtain a read-out of the state of health the actually measured parameters may be regressed against the database to find the most suitable entry or to obtain a read-out value by interpolation between known entries. Alternative systems can be used, e.g. the measured values can be compared using a neural network. Generally, a neural network is trained with images and data from reference measurements, taken from plant extremities for which the relevant parameters are known, e.g. maturation level, stress level, etc. known from other, usually destructive measurement techniques.

It is to be understood that although preferred embodiments, specific constructions and configurations, as well as materials, have been discussed herein for devices according to the present invention, various changes or modifications in form and detail may be made without departing from the scope of this invention as defined by the appended claims. Steps may be added or deleted to methods described within the scope of the present invention.

## Claims

1. A fluorescence imaging system for non-invasive, in situ measurement of fluorescence of a plant extremity, the system comprising a portable imaging device, the imaging device comprising
- a substantially light tight enclosure for receiving a plant extremity in an inner volume;
- an illumination device for providing diffuse actinic light to the plant extremity in an inner volume of the enclosure; and
- an image capturing device for capturing at least one image of the fluorescent light, emitted from the plant extremity when illuminated by means of the actinic light from the illumination device.

2. A fluorescence imaging system according to claim 1, wherein the inner volume has an inner wall delimiting the inner volume, the inner wall having a black colour.

3. A fluorescence imaging system according to any one of the claims 1 to 2, wherein the illumination comprises a plurality of light emitting elements distributed over the inner wall of the enclosure.

4. A fluorescence imaging system according to any one of the claims 1 to 3, wherein the enclosure comprises a dome having an outer rim delimiting an opening, the enclosure comprising a moveable lid for light tight closing the opening by contacting the dome along the outer rim.

5. A fluorescence imaging system according to claim 4, wherein the illumination comprises a plurality of light emitting elements distributed over the inner wall provided by the dome.

6. A fluorescence imaging system according to any one of the claims 4 to 5, wherein the image capturing device is optically connected with the inner volume by means of an aperture present at the extremity of the concave shape of the dome.

7. A fluorescence imaging system according to any one of the claims 1 to 6, wherein the portable imaging device further comprises at least a first filter, said first filter filtering fluorescent light form the actinic light.

8. A fluorescence imaging system according to any one of the claims 1 to 6, wherein the portable imaging device further comprises a filter wheel comprising at least a first filter, the filter wheel being suitable to bring said first filter in the optical path between said aperture and image capturing device.

9. A fluorescence imaging system according to claim 8, wherein the first filter is suitable for filtering fluorescent light from the actinic light.

10. A fluorescence imaging system according to any one of the claims 8 to 9, wherein the filter wheel comprises a plurality of filters, the filter wheel being suitable for aligning one of the plurality of filters with the optical path between said aperture and image capturing device.

11. A fluorescence imaging system according to any one of the claims 8 to 10, wherein said plurality of filters further comprises a set of filters which by colour addition can make white light.

12. A fluorescence imaging system according to any one of the claims 8 to 11, wherein said plurality of filters further comprises a grey filer.

13. A fluorescence imaging system according to any one of the claims 1 to 12, wherein said illumination further comprises at least one white light emitting element.

14. A fluorescence imaging system according to any one of the claims 1 to 13 , wherein the fluorescence imaging system further comprises a control unit for controlling the illumination and the image capturing device.

15. A fluorescence imaging system according to claim 14, herein the control unit is portable.

16. A fluorescence imaging system according to any one of the claims 1 to 15 , wherein the fluorescence imaging system further comprises a light intensity sensor for sensing the external light intensity.

17. A method to in situ capture an image of the fluorescence of a plant extremity, the method comprises the steps of:
- introducing a plant extremity into an inner volume of a portable imaging device in a light tight manner and without separating the plant extremity from the plant;
- illuminating the plant extremity in the inner volume with actinic light;
- capturing at least one image of the fluorescent light, emitted from the plant extremity when illuminated by means of the actinic light of the illumination.

18. A method to in situ capture data on the fluorescence of a plant extremity, the method comprises the steps of
- introducing a plant extremity in an inner volume of a portable imaging device in a light tight manner and without separating the plant extremity from the plant;
- illuminating the plant extremity in the inner volume with actinic light, the actinic illumination having an intensity substantially equal to the ambient light intensity;
- capturing at least one reference image of the fluorescent light, emitted from the plant extremity when illuminated by actinic light, the actinic illumination having an intensity substantially equal to the ambient light intensity;
- illuminating the plant extremity in the inner volume with actinic light, the actinic illuminating having an intensity at least equal to the saturating light intensity;
- capturing at least one sample image of the fluorescent light, emitted from the plant extremity when illuminated by the actinic light, the actinic illumination having an intensity having an intensity at least equal to the saturating light intensity;
- deriving from the at least one sample image and the at least one reference image, data on the fluorescence of a plant extremity.

19. A method according to claim 18, wherein the method further comprises the step of measuring the ambient light intensity, the capturing of the at least one reference image of the fluorescent light being done using actinic illumination having an intensity substantially equal to the measured ambient light intensity.

20. A method according to any one of the claims 18 to 19, wherein a plurality of sample images of the fluorescent light are captured, and wherein a main sample image is selected from the plurality of sample images.

21. A method according to any one of the claims 18 to 20, wherein a plurality of reference images of the fluorescent light are captured, and wherein a main reference image is selected from the plurality of reference images.

22. A method according to any one of the claims 18 to 19, wherein a plurality of sample images of the fluorescent light are captured, and wherein a main sample image is selected from the plurality of sample images, and wherein a plurality of reference images of the fluorescent light are captured, and wherein a main reference image is selected from the plurality of reference images, the data on the fluorescence of a plant extremity is derived from the main sample image and the main reference image.

23. A method according to any one of the claims 18 to 22, further comprising:
- introducing a reference surface in the inner volume,
- providing a grey filter in the optical path between the aperture and the image capturing device;
- capturing at least one correction image from the reference surface;
- obtaining correction parameters for correcting of the sample and/or the reference images from the correction image.

24. A method according to any one of the claims 18 to 23, further comprising
- providing a first filter in the optical path between the aperture and the image capturing device;
- illuminating the plant extremity with white light;
- capturing at least one image of the reflected light through the first filter reflected from the plant extremity;
- providing a second filter in the optical path between the aperture and the image capturing device;
- illuminating the plant extremity with white light from the illumination;
- capturing at least one image of the reflected light through the second filter, reflected from the plant extremity
- providing a third filter in the optical path between the aperture and the image capturing device;
- illuminating the plant extremity with white light from the illumination;
- capturing at least one image of the reflected light through the thrif filter, reflected from the plant extremity
- combining the images to thereby provide a colour image of the plant extremity.
